# EUROPÄISCHE PATENTSCHRIFT

(11) **EP 0 619 655 B1**
(45) Veröffentlichungstag und Bekanntmachung des Hinweises auf die Patenterteilung: **01.05.1996**
(21) Anmeldenummer: 94104944.7
(22) Anmeldetag: 29.03.1994
(51) Int. Cl.: H04B 3/56

(54) **Hochfrequenzsperrfilter für Niederspannungsnetze mit trägerfrequenter Nachrichtenübertragung**
High frequency rejection filter for low voltage networks with signal transmission by a carrier frequency
Filtre d'arrêt de haute fréquence pour réseaux basse tension avec transmission d'informations par fréquence du courant porteur

(30) Priorität: 03.04.1993 DE 4311088
(43) Veröffentlichungstag der Anmeldung: 12.10.1994
(73) Patentinhaber: ABB PATENT GmbH, D-68309 Mannheim (DE)
(72) Erfinder: Reitz, Thomas, D-58791 Werdohl (DE)
(74) Vertreter: Rupprecht, Klaus, Dipl.-Ing.

(56) Entgegenhaltungen:
- EP-A- 0 031 061
- CH-A- 610 455
- DE-B- 1 801 092

## Beschreibung

Die Erfindung bezieht sich auf ein Hochfrequenzsperrfilter zur Anordnung in einem zur trägerfrequenten Nachrichten-übertragung genutzten Niederspannungsnetz.

Ein Sperrfilter für eine solche Anwendung ist aus der EP-B1-00 31 061 bekannt. Das dort beschriebene Filter weist in Längsrichtung einen Parallel-Resonanzkreis auf, an dem die Hochfrequenzspannung abfällt. Die gewünschte hohe Dämpfung des hochfrequenten Signals wird allerdings nur in einem sehr kleinen Frequenzbereich erzielt. Um eine hohe Dämpfung in einem anderen Bereich zu erzielen, müssen der Kondensator und die Induktivität des Parallel-Resonanzkreises neu aufeinander abgeglichen werden. Je nach zu sperrender Trägerfrequenz müssen unterschiedlich bestückte Geräte eingesetzt werden.

Im praktischen Einsatz ist auch störend, daß der Schwingkreis durch externe Blindwiderstände, wie z.B. Transformatorspulen beeinflußt wird und daß er von der Abschlußimpedanz abhängig ist. Diese Eigenschaften bewirken, daß bei sich ändernden Netzverhältnissen keine optimale Dämpfung der Trägerfrequenz gegeben ist. Außerdem ist die bekannte Sperre nicht symmetrisch, wodurch in manchen Anwendungsfällen zwei Sperren gegeneinander geschaltet werden müssen.

Ein weiteres Problem tritt auf, wenn zur Nachrichtenübertragung ein System mit einem Frequenzsprungverfahren benutzt wird. Frequenzsprungverfahren sind z.B. in der EP-B1-01 99 148 beschrieben. In solchen Systemen können kurz nacheinander unterschiedliche Trägerfrequenzen zum Einsatz kommen, und zwar bevorzugt möglichst weit auseinanderliegende Frequenzen. Es versteht sich, daß die bekannte Trägerfrequenzsperre in einem solchen Fall nicht optimal auf die jeweils vorhandene Trägerfrequenz eingestellt sein kann.

In der DE-AS 18 01 092 ist eine Trägerfrequenzsperre für Hochspannungsleitungen beschrieben, die aus einer Drosselspule mit parallelliegendem Abstimmsatz besteht. Der Abstimmsatz besteht aus einer einstellbaren Kapazität und einer dazu parallelgeschalteten Reihenschaltung einer Induktivität, eines Widerstandes und einer weiteren einstellbaren Kapazität.

Der Erfindung liegt die Aufgabe zugrunde, ein Hochfrequenzsperrfilter anzugeben, das ohne manuellen Abgleich in einem vorgegebenen Frequenzbereich die erforderliche Filterwirkung aufweist.

Diese Aufgabe wird gemäß Patentanspruch 1 gelöst durch ein Hochfrequenzsperrfilter zur Anordnung in einem zur trägerfrequenten Nachrichtenübertragung genutzten Niederspannungsnetz, wobei das Filter als Breitbandsperre mit nachstehender überbrückter Doppel-T-Struktur aufgebaut ist:
a) zwischen einem ersten Filtereingang und einem ersten Filterausgang ist eine Längsspule angeordnet, die mit einer Serienschaltung eines ersten Festwiderstandes, eines trägerfrequenzabhängigen Widerstandes und eines zweiten Festwiderstandes überbrückt ist,
b) am Verbindungspunkt zwischen erstem Festwiderstand und trägerfrequenzabhängigen Widerstand ist eine erste Ableitspule angeschlossen und am Verbindungspunkt zwischen dem trägerfrequenzabhängigen Widerstand und dem zweiten Festwiderstand ist eine zweite Ableitspule angeschlossen,
c) die Ausgänge der beiden Ableitspulen sind miteinander und mit dem Eingang eines Ableitkondensators verbunden, dessen Ausgang mit der Basisleitung zwischen dem zweiten Eingang und zweiten Ausgang des Filters verbunden ist.

Vorteilhafte Ausgestaltungen sind in weiteren Ansprüchen angegeben und der unten stehenden Beschreibung eines Ausführungsbeispiels zu entnehmen.

Das vorgeschlagene Sperrfilter hat eine Reihe von Vorteilen. Das Doppel-T-Filter ist symmetrisch bezüglich der Filterstruktur und bezüglich des Übertragungsverhaltens. Es ist eine Bandfiltercharakteristik gegeben. Die Bandmittenfrequenz ist praktisch unabhängig von der Abschlußimpedanz. Bei Bandmittenfrequenz ist Hochohmigkeit zwischen Eingangs- und Ausgangsklemmen gegeben. Die Bandmittenfrequenz stellt sich automatisch auf die jeweilige Trägerfrequenz ein.

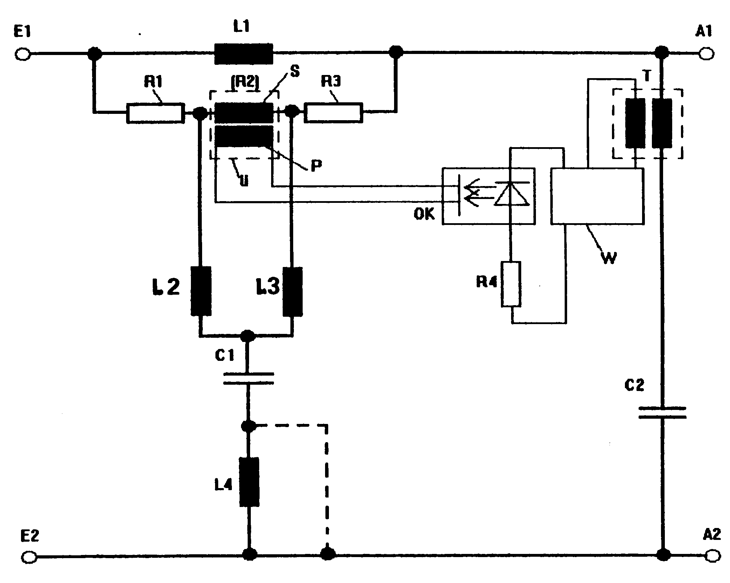

Die Erfindung wird nachstehend anhand eines in der Zeichnung dargestellten Ausführungsbeispiels näher erläutert.

Die dargestellte Filterstruktur, die auch als Kettenstruktur bezeichnet wird, ist ein Vierpol mit den Eingangsklemmen E1, E2 und Ausgangsklemmen A1, A2. Die zweite Eingangsklemme E2 und die zweite Ausgangsklemme A2 sind über eine Basisleitung miteinander und üblicherweise mit dem N-Leiter eines Niederspannungsnetzes verbunden. Ein L-Leiter des Netzes kann am ersten Eingang E1 und die Lastseite am ersten Ausgang A1 angeschlossen werden. Zwischen dem ersten Eingang E1 und dem ersten Ausgang A1 ist eine Längsspule L1 geschaltet. Die Längsspule L1 ist überbrückt durch drei Widerstände R1 bis R3. An den Verbindungspunkt zwischen erstem Widerstand R1 und dem mittleren Widerstand R2 ist eine erste Ableitspule L2 angeschlossen. Am Verbindungspunkt zwischen dem mittleren Widerstand R2 und dem folgenden Widerstand R3 ist eine zweite Ableitspule L3 angeschlossen. Die Ausgänge der Ableitspulen L2, L3 sind miteinander und mit einem Ableitkondensator C1 verbunden, dessen zweiter Anschluß mit der Basisleitung verbunden ist.

Die dargestellte Filterstruktur ist geeignet um die für die vorgesehene Anwendung typischen Lastströme bis 63 Ampere bei 50 Hz mit sehr geringer Dämpfung zu führen. Die Filterwirkung ist auch bei Umkehrung des Laststromes gegeben. Der Schaltungsaufwand ist gering, da nur wenige einfache Bauelemente benötigt werden.

Die Dimensionierung der Filterkomponenten kann nach bekannten Berechnungsmethoden erfolgen und den jeweiligen Verhältnissen angepaßt werden.

Um völlige Symmetrie des Übertragungsverhaltens zu erzielen, muß die Induktivität der Spule L1 zwölfmal so hoch wie die Induktivität der Spule L2 bzw. L3 sein; die Induktivität der Spulen L2 und L3 muß gleich hoch sein; außerdem müssen die Widerstände R1, R2 und R3 gleich groß sein. Es ist zweckmäßig, die Widerstände R1 bis R3 im Bereich von etwa 30 bis 60 Ohm zu wählen. Durch symmetrisches Verstellen der Widerstände R1 bis R3 kann die Bandmittenfrequenz präzise eingestellt werden.

Der Einfluß des mittleren Widerstandes R2 ist deutlich größer als der Einfluß der beiden anderen Widerstände R1 und R3. Deshalb ist es für praktische Zwecke ausreichend, die Einstellung der Bandmittenfrequenz allein durch Änderung des Widerstandswertes des mittleren Widerstandes R2 vorzunehmen. Die Widerstände R1 und R3 sind Festwiderstände.

Erfindungsgemäß ist der mittlere Widerstand R2 variabel ausgeführt. Sein Widerstandswert ist trägerfrequenzabhängig. Durch diese Maßnahme ist es möglich, Trägerfrequenzsperren so auszuführen, daß sie für einen größeren Trägerfrequenzbereich ohne jeglichen Abgleich eingesetzt werden können. Das Filter stellt dann selbsttätig die Bandmittenfrequenz ein, gesteuert durch die im Niederspannungsnetz vorhandene Trägerfrequenz. Durch Wahl geeigneter, d.h. ausreichend schnell arbeitender Mittel zur trägerfequenzabhängigen Änderung des Widerstands R2 kann das Filter auch raschen Trägerfrequenzwechseln folgen und ist dadurch besonders geeignet als Sperrfilter in Systemen, die nach einem Frequenzsprungverfahren arbeiten.

Nach einer bevorzugten Ausgestaltung wird der trägerfrequenzabhängige Widerstand R2 durch eine in der Zeichnung dargestellte und nachstehend beschriebene Anordnung gebildet.

Mit Hilfe eines Transformators T wird eine trägerfrequente Spannung aus dem Netz ausgekoppelt. Die Primärwicklung des Transformators T ist in Reihenschaltung mit einem Kondensator C2, an dem die Netzspannung abfällt, parallel zum Filterausgang A1, A2 geschaltet. An die Sekundärwicklung des Transformators T ist ein Frequenz/Spannungs(f/U)-Wandler W angeschlossen. Der f/U-Wandler W liefert eine frequenzabhängige variable Spannung, mit der über einen Schutzwiderstand R4 die lichtemittierende Diode LED eines Optokopplers OK betrieben wird. Der Wirkwiderstand des Feldeffekttransistors FET im Optokoppler OK ändert sich in Abhängigkeit von der Lichtemission der Diode LED. Der Feldeffekttransistor wird im linearen Bereich seiner Kennlinie betrieben, so daß die FET-Widerstandsänderung der Trägerfrequenzänderung entspricht. Der Wirkwiderstand des Feldeffekttransistors wird mit Hilfe eines Übertragers Ü mit dem Faktor ü · R von der Primärseite auf die Sekundärwicklung S übertragen, die mit den Festwiderständen R1 und R3 in Reihe liegt.

Theoretische Untersuchungen und praktische Versuche ergaben als geeignete Filterdimensionierung nachstehende beispielhaft genannte Dimensionierung. Dabei wurde eine Netzfrequenz von 50 Hz und eine Trägerfrequenz von 120 kHz ± 10 kHz bis 20 kHz zugrundegelegt. Als Netzimpedanz wurden 50 Ohm bei 50 Hz und 33 Ohm bei 120 kHz zugrundegelegt. Um eine gewünschte Filterwirkung zu erzielen, soll der resultierende Gesamtwiderstand des Filters bei 120 kHz über 33 Ohm liegen, bevorzugt bei etwa 60 Ohm. Dies wird erreicht mit nachstehender Dimensionierung der einzelnen Komponenten:
L1 = 480 µH
L2 = L3 = 40 µH
R1 = R3 = 52 Ohm
C1 = 0,22 µF, 250 Volt
C2 = 0,047 µF, 250 Volt
Übersetzungsverhältnis ü von T = 1 : 1; Ü = 1 : 1.

Der variable Widerstand R2, der vom Übertrager Ü mit angeschlossenem elektronischem Stellglied OK gebildet wird, hat ebenfalls einen Wert von 52 Ohm bei der mittleren Frequenz des vorgesehenen Einsatzbereiches.

Am Ableitkondensator C1 fällt die Netzspannung ab. Seine Dimensionierung ist unkritisch. Setzt man anstelle des Kondensators C1 einen Saugkreis, bestehend aus einer Reihenschaltung eines Kondensators C1 und einer Spule L4 ein, so kann eine Verringerung der Verlustleistung des Filters und eine um etwa 3 bis 4 dB erhöhte Dämpfung im Sperrbereich erzielt werden. Nachteilig ist allerdings der erhöhte Aufwand für die zusätzlich erforderlich Spule L4.

### Bezugszeichenliste

- E1, E2: Filtereingangsklemme
- A1, A2: Filterausgangsklemme
- L1: Längsspule
- L2, L3: Ableitspule
- L4: Saugkreisspule
- R1, R3: Festwiderstand
- R2: trägerfrequenzabhängiger Widerstand
- R4: Schutzwiderstand
- C1: Ableitkondensator bzw. Saugkreiskondensator
- C2: Kondensator
- T: Transformator
- Ü: Übertrager
- OK: elektronisches Stellglied, Optokoppler
- LED: lichtemittierende Diode
- FET: Feldeffekttransistor
- W: Frequenz/Spannungs(f/U)-Wandler

## Patentansprüche

1. Hochfrequenzsperrfilter zur Anordnung in einem zur trägerfrequenten Nachrichtenübertragung genutzten Niederspannungsnetz, dadurch gekennzeichnet, daß das Filter als Breitbandsperre mit nachstehender überbrückter Doppel-T-Struktur aufgebaut ist:
a) zwischen einem ersten Filtereingang (E1) und einem ersten Filterausgang (A1) ist eine Längsspule (L1) angeordnet, die mit einer Serienschaltung eines ersten Festwiderstandes (R1), eines trägerfrequenzabhängigen Widerstandes (R2) und eines zweiten Festwiderstandes (R3) überbrückt ist,
b) am Verbindungspunkt zwischen erstem Festwiderstand (R1), und trägerfrequenzabhängigen Widerstand (R2) ist eine erste Ableitspule (L2) angeschlossen und am Verbindungspunkt zwischen dem trägerfrequenzabhängigen Widerstand (R2) und dem zweiten Festwiderstand (R3) ist eine zweite Ableitspule (L3) angeschlossen,
c) die Ausgänge der beiden Ableitspulen (L2,L3) sind miteinander und mit dem Eingang eines Ableitkondensators (C1) verbunden, dessen Ausgang mit der Basisleitung zwischen dem zweiten Eingang (E2) und zweiten Ausgang (A2) des Filters verbunden ist.

2. Hochfrequenzsperrfilter nach Anspruch 1, dadurch gekennzeichnet, daß als trägerfrequenzabhängiger Widerstand (R2) eine Sekundärwicklung (S) eines Übertragers (Ü) in Reihe mit den Festwiderständen (R1,R3) geschaltet ist, dessen Primärwicklung (P) ein elektronisches Stellglied (OK) parallelgeschaltet ist und daß Mittel (W) vorhanden sind, die den Wirkwiderstand des elektronischen Stellgliedes (OK) trägerfrequenzabhängig verändern.

3. Hochfrequenzsperrfilter nach Anspruch 2, dadurch gekennzeichnet, daß ein Frequenz/Spannungs-Wandler (W) angeordnet ist, dessen Eingang über einen Transformator (T) an das Niederspannungsnetz angekoppelt ist, und dessen Ausgang mit dem elektronischen Stellglied (OK) verbunden ist.

4. Hochfrequenzsperrfilter nach Anspruch 2 oder 3, dadurch gekennzeichnet, daß als elektronisches Stellglied (OK) ein Optokoppler eingesetzt ist.

5. Hochfrequenzsperrfilter nach einem der Ansprüche 2 bis 4, dadurch gekennzeichnet, daß zwischen Frequenz/Spannungs-Wandler (W) und elektronischem Stellglied (OK) ein Schutzwiderstand (R4) geschaltet ist.

6. Hochfrequenzsperrfilter nach einem der Ansprüche 3 bis 5, dadurch gekennzeichnet, daß die Primärwicklung des Transformators (T) über einen Kondensator (C2) mit dem Niederspannungsnetz verbunden ist.

## Claims

1. Radiofrequency rejection filter for arrangement in a low-voltage network which is used for carrier-frequency message transmission, characterized in that the filter is constructed as a broadband filter with the following bridged twin-T structure:
a) arranged between a first filter input (E1) and a first filter output (A1) is a longitudinal coil (L1), which is bridged by a series circuit formed by a first fixed resistor (R1), a carrier-frequency-dependent resistor (R2) and a second fixed resistor (R3),
b) a first bypass coil (L2) is connected to the junction point between the first fixed resistor (R1) and the carrier-frequency-dependent resistor (R2), and a second bypass coil (L2) is connected to the junction point between the carrier-frequency-dependent resistor (R2) and the second fixed resistor (R3),
c) the outputs of the two bypass coils (L2, L3) are connected to one another and to the input of a bypass capacitor (C1), the output of which is connected to the base line between the second input (E2) and second output (A2) of the filter.

2. Radiofrequency rejection filter according to Claim 1, characterized in that the carrier-frequency-dependent resistor (R2) takes the form of a secondary winding (S) of a transformer (Ü), which secondary winding is connected in series with the fixed resistors (R1, R3), an electronic actuator (OK) being connected in parallel with the primary winding (P) of the said transformer, and in that means (W) are provided which alter the effective resistance of the electronic actuator (OK) as a function of the carrier frequency.

3. Radiofrequency rejection filter according to Claim 2, characterized in that there is arranged a frequency/voltage converter (W), the input of which is coupled to the low-voltage network via a transformer (T), and the output of which is connected to the electronic actuator (OK).

4. Radiofrequency rejection filter according to Claim 2 or 3, characterized in that an optocoupler is used as the electronic actuator (OK).

5. Radiofrequency rejection filter according to one of Claims 2 to 4, characterized in that a protective resistor (R4) is connected between the frequency/voltage converter (W) and the electronic actuator (OK).

6. Radiofrequency rejection filter according to one of Claims 3 to 5, characterized in that the primary winding of the transformer (T) is connected to the low-voltage network via a capacitor (C2).

## Revendications

1. Filtre de blocage de haute fréquence pour l'agencement dans un réseau à basse tension utilisé pour la transmission d'informations par fréquence porteuse, caractérisé en ce que le filtre est construit sous la forme d'un blocage de bande large comprenant une structure en T double pontée suivante :
a) entre une première entrée de filtre (E1) et une première sortie de filtre (A1) il est agencé une bobine longitudinale (L1) qui est pontée par un branchement en série d'une première résistance fixe (R1), d'une résistance (R2) dépendant de la fréquence porteuse et d'une seconde résistance fixe (R3),
b) au point de liaison entre la première résistance fixe (R1) et la résistance (R2) dépendant de la fréquence porteuse il est raccordé une première bobine de dérivation (L2) et au point de liaison entre la résistance (R2) dépendant de la fréquence porteuse et la seconde résistance fixe (R3) il est raccordé une seconde bobine de dérivation (L3),
c) les sorties des deux bobines de dérivation (L2, L3) sont reliées l'une à l'autre et à l'entrée d'un condensateur de dérivation (C1) dont la sortie est reliée au conducteur de base entre la deuxième entrée (E2) et la deuxième sortie (A2) du filtre.

2. Filtre de blocage de haute fréquence suivant la revendication 1, caractérisé en ce qu'en tant que résistance (R2) dépendant de la fréquence porteuse, il est branché en série avec les résistances fixes (R1, R3) un enroulement secondaire (S) d'un transformateur (U) dont l'enroulement primaire (P) est branché en parallèle à un élément de réglage électronique (OK) et en ce qu'il y a des moyens (W) qui modifient en fonction de la fréquence porteuse la résistance effective de l'élément de réglage électronique (OK).

3. Filtre de blocage de haute fréquence suivant la revendication 2, caractérisé en ce qu'il est agencé un convertisseur (W) de fréquence/tension dont l'entrée est accouplée par un transformateur (T) au réseau à basse tension et dont la sortie est reliée à l'élément de réglage électronique (OK).

4. Filtre de blocage de haute fréquence suivant la revendication 2 ou 3, caractérisé en ce qu'un optocoupleur est mis en oeuvre en tant qu'élément de réglage électronique (OK).

5. Filtre de blocage de haute fréquence suivant l'une des revendications 2 à 4, caractérisé en ce qu'une résistance de protection (R4) est branchée entre le convertisseur (W) de fréquence/tension et l'élément de réglage électronique (OK).

6. Filtre de blocage de haute fréquence suivant l'une des revendications 3 à 5, caractérisé en ce que l'enroulement primaire du transformateur (T) est relié par un condensateur (C2) au réseau à basse tension.
